Europäisches Patentamt

(19) European Patent Office

Office européen des brevets

(11) Publication number: **0 308 377 B1**

(12) # EUROPEAN PATENT SPECIFICATION

(45) Date of publication of patent specification :
**15.05.91 Bulletin 91/20**

(51) Int. Cl.⁵ : **B60R 13/06, B60J 1/17**

(21) Application number : **88830364.1**

(22) Date of filing : **13.09.88**

(54) **Window for a motor vehicle door.**

(30) Priority : **14.09.87 IT 6777987**

(43) Date of publication of application :
**22.03.89 Bulletin 89/12**

(45) Publication of the grant of the patent :
**15.05.91 Bulletin 91/20**

(84) Designated Contracting States :
**DE ES FR GB SE**

(56) References cited :
**EP-A- 0 065 336**
**EP-A- 0 158 334**
**DE-A- 3 236 168**
**DE-A- 3 625 069**
**GB-A- 2 133 448**
**US-A- 4 604 830**

(73) Proprietor : **FIAT AUTO S.p.A.**
**Corso Giovanni Agnelli 200**
**I-10135 Torino (IT)**

(72) Inventor : **Barbero, Mario**
**Via Ventimiglia, 98**
**I-10126 Torino (IT)**

(74) Representative : **Notaro, Giancarlo et al**
**c/o Jacobacci-Casetta & Perani S.p.A. Via**
**Alfieri, 17**
**I-10121 Torino (IT)**

## Description

The present invention relates to a window for a motor vehicle door, of the type comprising a frame defining a window opening and a pane of glass guided vertically in the frame and arranged so that, when it is in the raised position, its outer surface is substantially flush with the adjacent surfaces of the bodywork.

Solutions of this type have already been produced and enable the characteristics of the motor vehicle to be improved from the aerodynamic and aesthetic points of view.

More particularly, the present invention relates to a window according to the preamble of claim 1. A window of this type is known from GB-A 2 133 448 (See figure 6). This document shows a window arrangement for motor vehicles, wherein the window pane is guided by means of a channel which receives one or more stud-like projections secured to the pane. The channel is constituted by an extruded metal member set into a moulding which is secured adhesively to a seat of the door frame. The moulding forms a seal both with the window pane and with the body of the motor vehicle.

The main disadvantage of the structure shown in GB-A 2 133 448 is that the extruded metal member which forms the channel make the structure complicated and expensive. Furthermore, the moulding shown in GB-A 2 133 448 is not adequately supported in the space comprised between the rear edge of the glass and the body of the vehicle. Therefore, if the distance between the rear edge of the glass and the body of the vehicle were higher than the one shown in the above prior art document, the moulding could not provide a proper seal between the door frame and the body of the vehicle. Actually, even in the embodiments shown in the above document, the moulding alone is not sufficient to provide the seal between the door frame and the body and a second door seal interposed between the door frame and the body of the vehicle is required.

The object of the invention is to produce a window of the type indicated above, which is particularly simple and functional.

In order to achieve this object, the subject of the invention is a window according to the characterising portion of claim 1.

Further developments in line with claim 1 are referred to in the dependent claims.

The invention will now be described with reference to the appended drawings, provided purely by way of non-limiting example, in which :

Figure 1 is a schematic side view of the motor vehicle window according to the invention, and

Figure 2 is a section taken on a line II-II of Figure 1.

With reference to the drawings, the window of a motor vehicle door 2 is indicated 1 and comprises a sheet metal frame 3 in which a pane of glass 4 is guided for vertical sliding.

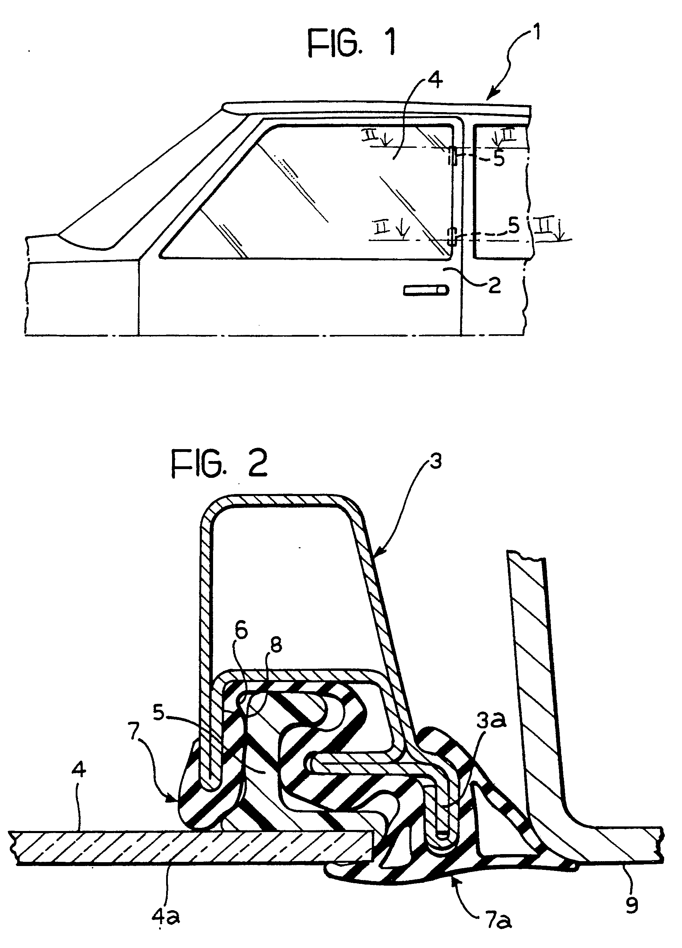

The rear edge of the glass 4 is provided with two appendages 5, one of which is shown on an enlarged scale in Figure 2. Each appendage 5 has a body of plastics material, for example expanded polyurethane, moulded onto the inner surface of the glass 4. The body of the appendage 5 is substantially L-shaped in section, as can clearly be seen from Figure 2. The two appendages 5 are guided for sliding in a channel 6 of corresponding section formed in a rubber weather strip 7 fixed to the frame 3 of the door. The part of the weather strip 7 which is fixed to the frame 3 is housed in a seat 8 defined by the sheet metal constituting the frame.

As can be seen in Figure 2, the appendages 5 project inwardly of the passenger compartment, so that the glass is supported and guided with its outer surface 4a substantially flush with the surface 9 of the bodywork adjacent the glass.

The weather strip 7 has an auxiliary portion 7a which is anchored to a flange 3a of the frame and ensures both the seal between the glass and the door frame and the seal between the door frame and the body of the motor vehicle, when the door is closed.

In this way, the whole structure is relatively simple, economical to construct, and reliable.

The surface of the part of the weather strip 7 which is used to guide the appendages 5 is treated so as to achieve optimal sliding conditions for the appendages 5.

## Claims

1. A window for a motor vehicle door comprising a door frame (3) defining a window opening and a pane of glass (4) guided vertically in the frame (3) and arranged so that, when it is in the raised position, its outer surface is substantially flush with the adjacent surfaces of the bodywork of the motor vehicle, wherein the rear edge of the glass is provided with two appendages (5) which are guided for sliding in a channel (6) fixed to the door frame (3), the door frame (3) defining a seat (8) wherein a weather strip (7) is housed, the weather strip having an auxiliary portion (7a) which is anchored to a flange (3a) of the door frame (3) and which serves both as the seal between the glass (4) and the door frame (3) and as the seal between the door frame (3) and the body of the motor vehicle, characterised in that said channel (6) is directly formed in the part of the weather strip (7) which is housed in the seat (8) of the door frame (3), and in that the flange (3a) extends in a direction substantially orthogonal to the glass (4) and is interposed between the rear edge of the glass (4) and the surface of the bodywork which faces the rear edge of the glass.

2. A window according to claim 1, characterised in that each appendage (5) has a body of plastics material moulded onto the inner surface of the glass (4).

3. A window according to claim 1, characterised in that each appendage (5) is substantially L-shaped in section, and in that the channel (6) for guiding the appendages (5) has a corresponding section.


## Ansprüche

1. Fenster für eine Kraftfahrzeugtür mit einem eine Fensteröffnung begrenzenden Türrahmen (3) und einer in diesem Rahmen (3) vertikal geführten Glasscheibe (4), die so angeordnet ist, daß ihre Außenfläche in angehobener Stellung im wesentlichen mit den benachbarten Flächen der Kraftfahrzeug-Karosserie fluchtet, wobei die Hinterkante der Glasscheibe (4) mit zwei Ansätzen (5) versehen ist, die in einem an dem Türrahmen (3) befestigten Kanal (6) gleitbar geführt sind, und wobei in dem Türrahmen (3) ein Sitz (8) ausgebildet ist, der eine Wetterleiste (7) aufnimmt, die mit einem zusätzlichen Profilabschnitt (7a) an einem Flansch (3a) des Türrahmens (3) verankert ist und sowohl als Dichtung zwischen der Glasscheibe (4) und dem Türrahmen (3) wie auch als Dichtung zwischen dem Türrahmen (3) und der Karosserie des Kraftfahrzeug dient, dadurch gekennzeichnet, daß der genannte Kanal (6) direkt einstückig mit der in dem Sitz (8) des Türrahmens (3) angeordneten Wetterleiste (7) ausgebildet ist und daß der Flansch (3a) in einer zu der Glasscheibe (4) im wesentlichen orthogonalen Richtung verläuft und zwischen der Hinterkante der Glasscheibe (4) und der der Hinterkante der Glasscheibe zugewandten Fläche der Karosserie liegt.

2. Fenster nach Anspruch 1, dadurch gekennzeichnet, daß jeder der Ansätze (5) einen Kunststoffkörper besitzt, der auf der Innenfläche der Glasscheibe (4) aufgeformt ist.

3. Fenster nach Anspruch 1, dadurch gekennzeichnet, daß jeder der Ansätze (5) einen im wesenltichen L-förmigen Querschnitt hat und daß der Kanal (6) für die Führung der Ansätze (5) einen korrespondierenden Querschnitt hat.


## Revendications

1. Fenêtre pour porte de véhicule automobile comprenant un cadre de porte (3) qui définit une baie de fenêtre et une glace (4) guidée verticalement dans le cadre (3) et agencée de telle manière que, lorsqu'elle est dans la position relevée, sa surface externe soit sensiblement à l'affleurement des surfaces de la carrosserie du véhicule automobile qui lui sont adjacentes, dans laquelle le bord arrière de la glace est muni de deux tenons (5) qui sont guidés pour coulisser dans une rainure (6) fixée au cadre (3) de la porte, le cadre (3) de la porte définissant un logement (8) dans lequel est logée une moulure de joint (7), la moulure possédant une partie auxiliaire (7a) qui est ancrée à un rebord (3a) du cadre (3) de la porte et qui sert à la fois de joint d'étanchéité entre la glace (4) et le cadre (3) de la porte et de joint d'étanchéité entre le cadre (3) de la porte et la carrosserie du véhicule, caractérisée en ce que ladite rainure (6) est formée directement dans la partie de la moulure de joint (7) qui est logée dans le logement (8) du cadre (3) de la porte et en ce que le rebord (3a) s'étend dans une direction sensiblement perpendiculaire à la glace (4) et est interposé entre le bord arrière de la glace (4) et la surface de la carrosserie qui fait face au bord arrière de la glace.

2. Fenêtre selon la revendication 1, caractérisée en ce que chaque tenon (5) comprend un corps en matière plastique qui est moulé sur la surface interne de la glace (4).

3. Fenêtre selon la revendication 1, caractérisée en ce que chaque tenon (5) possède sensiblement la forme d'un L en section transversale et en ce que la rainure (6) servant à guider les tenons (5) possède une section correspondante.

FIG. 1

FIG. 2